(19) Europäisches Patentamt / European Patent Office / Office européen des brevets

(11) **EP 2 251 711 A1**

(12) **DEMANDE DE BREVET EUROPEEN**

(43) Date de publication:
**17.11.2010 Bulletin 2010/46**

(51) Int Cl.:
**G01S 13/22** $^{(2006.01)}$

(21) Numéro de dépôt: **10161718.1**

(22) Date de dépôt: **03.05.2010**

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**
Etats d'extension désignés:
**BA ME RS**

(30) Priorité: **05.05.2009 FR 0952976**

(71) Demandeur: **Meteo France**
**75340 Paris Cedex 7 (FR)**

(72) Inventeur: **Parent du Chatelet, Jacques**
**75015 Paris (FR)**

(74) Mandataire: **Beauvais, Emmanuelle**
**SCHMIT CRETIEN**
**Département BREVETS**
**16, rue de la Paix**
**75002 Paris (FR)**

(54) **Procédé et module de détermination de la vitesse d'au moins une cible par un radar météorologique**

(57) Procédé de détermination de la vitesse d'au moins une cible par un radar météorologique (1) comprenant les étapes suivantes :
- réception d'un signal provenant de la réflexion sur au moins la cible d'impulsions émises par le radar (1) selon un mode d'émission du radar tel que l'intervalle de temps entre deux impulsions est modifié à chaque impulsion et prend successivement m valeurs distinctes T1, T2,..., Tm et avec m $\geq$ 2 ;

- en fonction dudit signal reçu, détermination du spectre de la fonction d'autocorrelation du signal reçu en exploitant au moins les valeurs d'autocorrélation en des points du type a1.T1 + a2.T2+...+ am.Tm, ou des multiples desdits points, où a1, a2, ..., am sont des coefficients prenant des valeurs entières positives et au moins deux desdits m coefficients sont non nuls;
- détermination de la vitesse de la cible en fonction du spectre déterminé.

Fig. 1

**Description**

La présente invention concerne le domaine des radars météorologiques, utilisés pour repérer, par effet Doppler, les phénomènes météorologiques, calculer leur vitesse et déterminer leur type (pluie, neige, grêle, vent, l'eau d'un nuage, les vagues à la surface de la mer, etc).

Un radar météorologique est un radar à impulsions, émettant régulièrement une impulsion de très courte durée par l'intermédiaire d'une antenne généralement pivotante. Une impulsion émise est suivie d'un temps déterminé d'écoute beaucoup plus long, pour « écouter » les échos de l'impulsion retournés vers l'antenne par des particules dans l'air. Une fois que le temps déterminé est écoulé, une nouvelle impulsion est émise.

Les échos reçus sont analysés pour caractériser les phénomènes météorologiques présents : en effet, si les particules sont animées d'un mouvement, les impulsions retournées au radar présentent un décalage de phase par rapport aux impulsions émises (effet Doppler). Déterminer la valeur du décalage permet de calculer la vitesse radiale des particules par rapport au radar météorologique.

Le principe de mesure de la vitesse radiale d'une cible naturelle par effet Doppler dans un radar météorologique est connu depuis longtemps : le signal reçu de la cible illuminée est considéré comme étant une série temporelle complexe continue s(t) échantillonnée, pour un radar à impulsion classique, à la cadence d'émission du radar. Le signal reçu devient donc une série temporelle discontinue s(ti) ; l'intervalle de temps entre deux échantillons étant égal au PRT (Pulse Repetition Time) du radar.

Pour un signal à la fréquence f renvoyé par une cible de vitesse radiale Vr, la phase $\varphi(t)$ du signal s(t) est donnée par :

$$\varphi(t) \ = \ \frac{4\pi \, f \, V_r}{c} \, t + \varphi_0 \qquad\qquad \textbf{(1)}$$

où c est la vitesse de propagation de la lumière, t le temps et $\varphi_0$ la phase du signal pour t=0.

En détermination principale (c'est à dire entre 0 et $2\pi$), la différence de phase $\Delta\varphi$ entre deux échantillons successifs séparés par un intervalle de temps $\Delta t$ est égale à :

$$\Delta\varphi \ = \ \frac{4\pi \, f \, V_r}{c} \Delta t + 2k\pi \qquad\qquad (2)$$

où k est un nombre entier

Tant que la vitesse radiale Vr ne dépasse pas c / (2 f $\Delta t$), Vr peut être déduite de la mesure de $\Delta\varphi$, en affectant alors à k la valeur nulle. Si par contre aucune information n'est disponible a priori sur Vr pour que l'on soit certain que k=0, alors la mesure de la vitesse Vr est ambiguë et on a :

$$Vr \ = \ \frac{c \, \Delta\varphi}{4\pi \, f \, \Delta t} \ - \ \frac{c}{2 \, f \, \Delta t} k \ = \ Vr' \ - \ k \ V_N \qquad\qquad (3)$$

où k est un nombre entier qui rend compte du rang d'ambiguïté. La vitesse Vr' est la vitesse radiale en détermination principale (i.e. si k=0). La vitesse VN = c/(2 f $\Delta t$) est la vitesse maximale mesurable sans ambiguïté. On l'appelle souvent «vitesse de Nyquist», c'est à dire la vitesse maximale mesurable dans les conditions d'échantillonnage du signal.

Le calcul de $\Delta\varphi$ est fait par exemple par une méthode dite de « pulse pair », comme suit :

$$\Delta\varphi \ = \arg(< s(t).s*(t + \Delta t) >) \qquad\qquad (4)$$

où * désigne le complexe conjugué et < > l'opération de moyenne.

Il existe diverses méthodes pour tenter de lever les ambiguïtés de mesure de la vitesse radiale d'une cible naturelle distribuée dans le volume sondé par le radar météorologique. On évoquera ci-dessous la méthode dite « de la continuité spatiale », la méthode dite « double prf », les méthodes en double PRT et triple PRT, et la méthode de Sachidananda et Zrnié.

La méthode dite « de la continuité spatiale » est basée sur une hypothèse de continuité spatiale de la vitesse radiale : on part d'une référence, fournie par exemple par une mesure ponctuelle de la vitesse du phénomène (par exemple la vent au sol), et on admet que le gradient spatial de la vitesse radiale reste toujours inférieur à la moitié de la vitesse de Nyquist : $|dVr/dx| < V_N/2$.

On calcule le gradient de Vr' au voisinage de la référence, et, si ce gradient est supérieur à $V_N/2$, on l'attribuera à un changement du rang d'ambiguïté k entre les points considérés, et ainsi de suite de proche en proche.

Cette méthode est bien adaptée aux champs de vitesse continus dans l'espace, et qui ne présentent pas de gradients trop forts. Elle est difficile à appliquer lorsque le champ n'est pas continu, comme c'est par exemple le cas pour la mesure Doppler du vent par un radar météorologique, puisque le support de mesure (la pluie) est un champ discontinu. Elle présente l'inconvénient de nécessiter une référence indépendante à l'intérieur du champ de mesure. Cela peut poser des problèmes pour mesurer la vitesse du vent dans une structure pluvieuse en altitude loin du radar.

En effectuant la transformée de Fourier de la série temporelle s(t) échantillonné à la cadence T (T est le PRT du radar), on peut restituer le spectre du signal dans une gamme de fréquence Doppler comprise entre $-V_N/2$ et $+V_N/2$. Les composantes Doppler situées en dehors de cette gamme se trouveront « repliées » entre ces deux limites.

La méthode dite « double prf » consiste à émettre alternativement un certain nombre n d'impulsions radar à une première cadence prf1 (prf = pulse repetition frequency), puis à une seconde cadence prf2.

Le schéma d'émission (intervalles de temps entre impulsions) est alors :

$$T_1^1, T_1^2, \ldots T_1^n \; ; \; T_2^1, T_2^2, \ldots T_2^n \; ; \; T_1^1, T_1^2, \ldots T_1^n \; ; \; T_2^1, T_2^2, \ldots T_2^n \; ; \; \ldots\ldots$$

$$avec \; T_1^1 = T_1^2 = \ldots = T_1^n = T1 = 1/prf1 \qquad et \qquad T_2^1 = T_2^2 = \ldots = T_2^n = T2 = 1/prf2$$

En utilisant la méthode du « pulse pair » de l'équation (4), ces deux séquences permettent de calculer les différences de phase $\Delta\varphi1$ et $\Delta\varphi2$ qui correspondent aux cadences prf1 et prf2 respectivement.

A partir de ces valeurs $\Delta\varphi1$ et $\Delta\varphi2$, on calcule un couple de vitesse radiale Vr1(k1) ( et Vr2(k2) ) pour chaque couple des rangs d'ambiguïté (k1, k2) en utilisant l'équation (3). On admet que la différence $|Vr1(k1) - Vr1(k2)|$ est la plus petite pour le bon couple (k1, k2) ce qui permet de déterminer ce dernier.

Cette méthode permet de lever des ambiguïtés jusqu'au rang 2. Pour une antenne tournante, elle présente l'inconvénient que les deux séries temporelles, aux cadences prf1 et prf2, ne proviennent pas tout à fait du même endroit ce qui peut être gênant en cas de forts gradients de la vitesse radiale.

La méthode permet de restituer le spectre du signal par transformée de Fourier du type FFT de chacune des séries temporelles en prf1 et prf2.

Une autre méthode s'appuie sur un schéma d'émission en « double PRT » [Sebastian M. Torres, Yannick F. Dubel and D.S. Zrnié, 2004, Design, Implementation, and Demonstration of a Staggered PRT Algorithm for the WSR-88D, Journal of Atmospheric and Oceanic Technology, 21, 1389-1399] selon lequel l'intervalle de temps entre impulsions successives est changé à chaque impulsion :

$$T_1^1, T_2^1 \; ; \; T_1^2, T_2^2 \; ; \; T_1^3, T_2^3 \; \cdots\cdots \; T_1^n, T_2^n \; ; \ldots$$

$$avec \; T_1^1 = T_1^2 = T_1^3 = \cdots = T_1^n = T1 \; ; \quad T_2^1 = T_2^2 = T_2^3 = \ldots = T_2^n = T2$$

La méthode de restitution de la vitesse radiale est la même que celle exposée ci-dessous pour la méthode « double prf ».

Comme les séquences sont entrelacées, elles correspondent, beaucoup mieux qu'en double prf, à la même cible radar.

Cependant les séries temporelles ne sont pas échantillonnées avec un intervalle constant, ce qui empêche la restitution du spectre du signal s(t) par simple transformation du type FFT.

La méthode en triple PRT [P.Tabary, J. Gagneux and J. Parent-Du-Chatelet, 2005, Test of a Staggered PRT Scheme for the French Radar Network, Journal of Atmospheric and Oceanic Technology,22, 352-364] consiste à entrelacer 3 intervalles de temps T1, T2 et T3 pour arriver à une séquence du type :

T11, T21 , T31;  T12, T22, T32;  T13, T23, T33;  ……. T1n, T2n, T3n;…

avec T11 =T12=.… =T1n=T1;  T21=T22=…=T2n=T2;  T31=T32=…=T3n= T3.

Le traitement est très similaire à celui de la méthode « double PRT », mais la méthode permet de lever des ambiguïtés de rang bien supérieur à 2, jusqu'à 10 d'après Tabary et al.

Comme en « double PRT », les séries temporelles ne sont pas échantillonnées avec un intervalle de temps constant et l'analyse spectrale par simple FFT n'est donc pas possible.

Par ailleurs, Sachidananda et Zrnié ont développé un formalisme destiné à permettre la restitution du spectre du signal reçu en double PRT. La base de ce formalisme est de considérer que le signal reçu s'(t), après échantillonnage, peut être représenté par le produit du « véritable signal » s(t) considéré comme continu, par une fonction d'échantillonnage $\Psi$(t) , dite « fonction peigne » égale à 1 aux instants d'échantillonnage, à zéro partout ailleurs.

Cette technique est par exemple décrite dans les documents suivants :

- M. Sachidananda, D.S. Zrnié, 2006, Ground Clutter Filtering Dual polarized, Staggered PRT sequences, Journal of Atmospheric and Oceanic Technology, 23, 1114-1130 ;
- M. Sachidananda, D.S. Zrnié, 2002, An Improved Clutter Filtering and spectral Moment Estimation Algorithm for Staggered PRT sequences, Journal of Atmospheric and Oceanic Technology, 19,323-331 ;
- M. Sachidananda, D.S. Zrnié, 2000, Clutter filtering and spectral Moment Estimation for Doppler weather radars Using Staggered Pulse Repetition Time (PRT), Journal of Atmospheric and Oceanic Technology, 17, 323-331.

En simple PRT, la fonction peigne d'échantillonnage $\Psi$(t) est donnée par :

$$\Psi(t) = \delta(t - mT)$$

où $\delta$ est la fonction de Dirac, T l'intervalle de temps entre les impulsions d'émission (ou PRT), et m un entier.

Le spectre $\Xi$(f) de la fonction $\delta$ est également un peigne de Dirac, avec une raie pour f=0, et une période égale à 1/T.

Le signal reçu est donné par : s'(t) = s(t) . $\Psi$(t) et, dans le domaine des fréquences, le spectre S'(f) du signal après échantillonnage est égal au produit de convolution du spectre du signal S(f) par le spectre de la fonction peigne $\Xi$(f) :

$$S'(f) = \Xi(f) \; * \; S(f) \tag{5}$$

où * signifie le produit de convolution

Compte tenu de la forme de $\Xi$(f), le spectre S'(f) est égal à S(f) avec des répliques périodiques pour les intervalles multiples de 1/T.

En « double PRT », la fonction peigne d'échantillonnage est donnée par :

$$\Psi(t) = \delta[ \; t - m(T1+T2) - T1 \; ] + \delta[ \; t - m(T1+T2) - T1 - T2]$$

C'est la somme de deux peignes de Dirac, tous deux avec la même période (T1+T2). Le spectre $\Xi$(f) sera donc la somme de deux spectres, tous deux périodiques de période 1/(T1+T2). Il contiendra une raie spectrale principale à 0, ainsi que des raies aux fréquences 1/(T1+T2), dont les amplitudes seront le résultat de la combinaison vectorielle de celles des deux spectres. Elles seront plus ou moins grandes suivant les valeurs de T1,T2 et f. La périodicité du spectre somme sera de 1/(T2-T1), qui peut être bien plus grande que T1 ou que T2.

La méthode de Sachidananda et Zrnié consiste à écrire l'équation (5) sous une forme matricielle :

$$S'(f) = [\Xi] \; .S(f)$$

où [$\Xi$] est la matrice de convolution

Sous certaines conditions, cette matrice peut être inversée, ce qui permet alors de restituer le spectre du signal initial S(f), en inversant la matrice [Ξ] :

$$S(f) = [\Xi]^{-1} \cdot S'(f)$$

Disposer du spectre S(f) du signal d'écho est très avantageux, car il permet d'une part analyse du spectre, de filtrer les signaux parasites, de repérer les divers phénomènes météorologiques et de calculer leur vitesse radiale respective.

Cependant, les calculs matriciels nécessaires (une matrice 5x5 pour chaque pixel radar) sont assez coûteux et la méthode n'a donc pas pour le moment pu être appliquée en opérationnel.

En « triple PRT », la méthode conduit à des traitements matriciels encore beaucoup plus importants (matrices de 30x30 ou plus) qui ne sont pas du tout envisageables non plus en mode opérationnel.

Il est ainsi besoin d'une méthode de détermination de la vitesse de phénomènes radiologiques permettant d'une part de lever les ambiguïtés et d'autre part de déterminer le spectre du signal réfléchi. En effet, le spectre du signal permet de fournir des informations sur la présence de zones de cisaillements, ou encore permet de filtrer les signaux indésirables (par exemple ceux issus d'une réflexion sur le sol).

La présente invention propose suivant un premier aspect un procédé de détermination de la vitesse d'au moins une cible par un radar météorologique comprenant les étapes suivantes :

- réception d'un signal provenant de la réflexion sur au moins la cible d'impulsions émises par le radar selon un mode d'émission du radar tel que l'intervalle de temps entre deux impulsions est modifié à chaque impulsion et prend successivement m valeurs distinctes T1, T2,..., Tm et avec m ≥ 2 ;
- en fonction dudit signal reçu, détermination du spectre de la fonction d'autocorrelation du signal reçu, en exploitant au moins les valeurs d'autocorrélation en des points du type a1.T1 + a2.T2+...+ am.Tm, ou des multiples desdits points, où a1, a2, ..., am sont des coefficients prenant des valeurs entières positives et au moins deux desdits m coefficients sont non nuls;
- détermination de la vitesse de la cible en fonction du spectre déterminé.

Un tel procédé permet ainsi de calculer aisément la vitesse d'une cible météorologique et également de déterminer le spectre du signal reçu par le radar. Il permet de s'affranchir des problèmes d'ambiguïté, de façon robuste et sans avoir à mettre en oeuvre de coûteux traitements.

Les échantillons reçus de signal en PRT multiples (c'est-à-dire en considérant des intervalles de temps prenant successivement m valeurs distinctes, m ≥ 2 ) sont exploités par le procédé en combinant les informations respectives fournies de manière à exploiter la valeur de l'autocorrélation du signal reçu en de nombreux points. La qualité de restitution de la fonction d'autocorrélation peut ainsi être enrichie, ce qui permet d'obtenir un spectre du signal reçu s(t) pertinent.

Selon un mode de réalisation, on définit le mode d'émission du radar en fonction d'une répartition spectrale souhaitée de la fonction d'autocorrélation du signal reçu, de manière à enrichir le spectre de la fonction d'autocorrélation obtenu.

Selon un mode de réalisation, le nombre m de valeurs distinctes d'intervalles de temps et/ou les valeurs respectives des intervalles de temps et/ou l'ordre de succession desdits intervalles de temps sont adaptés en fonction de la résolution du spectre souhaitée et/ou de la vitesse à déterminer

Une telle disposition permet, en agissant sur le mode d'émission des impulsions, d'obtenir avec la précision souhaitée des résultats relatifs à la vitesse à déterminer ou au spectre à exploiter.

Selon un mode de réalisation, on calcule des valeurs d'autocorrélation (C) du signal reçu en des points du type a1.T1 + a2.T2+...+ am.Tm, ou des multiples desdits points, où a1, a2, ..., am sont des coefficients prenant des valeurs entières positives et au moins deux desdits m coefficients sont non nuls. Puis on calcule une transformée fréquentielle de la fonction d'autocorrélation en fonction desdites valeurs calculées

Selon un mode de réalisation, les m valeurs distinctes d'intervalle de temps sont de la forme : Tk = T1 + (k-1).δT, avec k=1 à m, où Tk est la k-ième valeur d'intervalle de temps, et δT est un pas non nul.

Selon un mode de réalisation, les valeurs du pas δT et de m sont déterminées de façon à ce que (m-1).δT soit sensiblement égal à T1.

Ces deux dernières dispositions, en permettant de disposer d'échantillons de la fonction d'autocorrélation selon un pas régulier, contribuent à d'une part disposer d'un spectre plus significatif, et d'autre part à utiliser des algorithmes tels que la Transformée de Fourier rapide (FFT) pour calculer la transformée fréquentielle.

Selon un mode de réalisation, on sélectionne un mode entre un premier mode opérationnel, et un second mode opérationnel. Dans le premier mode, le calcul de la vitesse est effectué en fonction de la réflexion de toutes les impulsions et dans le second mode, le calcul de la vitesse est effectué en fonction de la réflexion de seulement certaines impulsions et en fonction d'une comparaison avec un seuil des valeurs de l'intervalle de temps ayant suivi lesdites impulsions.

Cette disposition permet de caractériser des phénomènes survenant dans une portée supérieure à une valeur donnée en n'utilisant que les signaux fournissant de l'information sur ces phénomènes.

Suivant un second aspect, l'invention propose un module de détermination de la vitesse d'au moins une cible destiné pour un radar météorologique comprenant :

- des moyens de réception d'un signal provenant de la réflexion sur au moins la cible d'impulsions émises par le radar selon un mode d'émission du radar tel que l'intervalle de temps entre deux impulsions est modifié à chaque impulsion et prend successivement m valeurs distinctes T1, T2,..., Tm et avec $m \geq 2$ ;
- des moyens de détermination du spectre de la fonction d'autocorrelation du signal reçu adaptés pour en fonction dudit signal reçu, déterminer le spectre de la fonction d'autocorrelation du signal reçu en exploitant au moins les valeurs d'autocorrélation en des points du type a1.T1 + a2.T2+...+ am.Tm, ou des multiples desdits points, où a1, a2, ..., am sont des coefficients prenant des valeurs entières positives et au moins deux desdits m coefficients sont non nuls;
- des moyens de détermination de la vitesse de la cible en fonction du spectre déterminé.

L'invention sera mieux comprise à la lecture de la description qui suit et à l'examen des figures qui l'accompagnent. Ces figures sont données à titre illustratif mais nullement limitatif de l'invention.

Sur ces figures :

- la figure 1 représente un radar météorologique dans un mode de réalisation de l'invention ;
- la figure 2 représente des impulsions en mode PRT multiples;
- la figure 3 représente des étapes d'un procédé dans un mode de mise en oeuvre de l'invention.

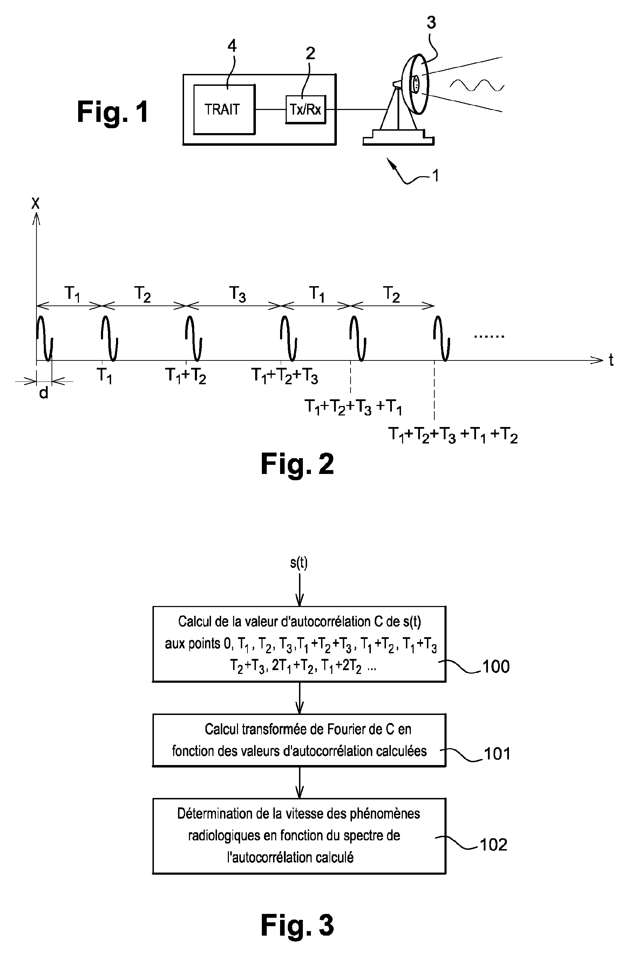

La figure 1 représente schématiquement un système radar 1 dans un mode de réalisation de l'invention, comprenant un module d'émission-réception 2 connecté à une antenne 3 pivotante pour sonder l'espace autour du système radar 1, et comprenant en outre un module de traitement 4.

Le module d'émission-réception 2 est adapté pour générer des ondes électromagnétiques sous la forme d'impulsions, qui sont émises par l'antenne 2.

Selon l'invention, les impulsions sont émises en mode PRT multiples, c'est-à-dire que l'intervalle de temps entre deux impulsions successives est modifié selon un cycle déterminé.

Par exemple, dans un cas particulier ici considéré, les impulsions X sont émises en triple PRT, c'est-à-dire selon des intervalles de temps de durée T1, T2 et T3 répétés selon le cycle ordonné T1, T2 et T3, où T1, T2 et T3 sont distinctes.

La figure 2 représente les amplitudes des impulsions X émises par le système radar 1 en fonction du temps t. Ainsi une même impulsion, par exemple de durée d, est émise aux temps t égaux à T1, T1+T2, T1+T2+T3, T1+T2+T3+T1, T1 +T2+T3+T1 +T2 etc.

Dans le mode de réalisation considéré, le module d'émission-réception 2 est en outre adapté pour échantillonner, à la cadence d'émission, le signal s(t) reçu par l'antenne 2 suite à chaque impulsion transmise, ce signal résultant des réflexions de cette impulsion sur les particules présentes dans l'espace sondé. Le module d'émission-réception 2 est adapté pour délivrer au module de traitement 4 chaque échantillon ainsi déterminé.

Le module de traitement 4 est adapté pour mettre en oeuvre des étapes d'un procédé selon un mode de réalisation de l'invention, tel que représenté en figure 3.

Le module de traitement 4 est adapté pour effectuer des traitements numériques du signal s(t) échantillonné par le module d'émission-réception 2 à des intervalles de temps définis selon le cycle T1, T2, T3 (généralement, la valeur du pas de décalage entre deux intervalles de temps successifs ne dépassera pas (T1)/2 et sera supérieur à c/ (2f*Vitesse maximale attendue) ).

Considérons la fonction d'autocorrélation $C(\tau)$ du signal s(t) représenté sous forme complexe, définie par l'équation suivante : $C(\tau) = < s(t) \cdot s^*(t+\tau) >$, où * désigne le nombre complexe conjugué et < > la moyenne

Dans une étape 100, le module de traitement calcule en fonction des échantillons reçus la valeur de la fonction d'autocorrélation C en un nombre N de points déterminés.

Par exemple, la valeur $C(\tau)$ est calculée pour les points déterminés par $\tau$ respectivement pris égal à 0, T1, T2, T3, puis par des points supplémentaires définis par $\tau$ pris égal à a1.T1 + a2.T2+...+ am.Tm, ou des multiples de ces points, où a1, a2, ..., am sont des coefficients prenant des valeurs entières positives et au moins deux desdits m coefficients sont non nuls (par exemple T1+T2+T3, T1+T2, T1 +T3, T2+T3, 2T1 +T2, T1 +2T2 etc).

Dans une étape 101, le module de traitement 4 effectue une transformation fréquentielle discrète de la fonction d'autocorrélation C en fonction des valeurs d'autocorrélation ainsi calculées, et ainsi obtient le spectre de la fonction d'autocorrélation.

Dans une étape 102, le module de traitement 4 estime la position d'un pic maximum du spectre non positionné en zéro. En prenant comme hypothèse que le spectre du signal de réflexion s(t) est estimé par le spectre de la fonction d'autocorrélation, on déduit de cette position estimée une vitesse radiale d'un phénomène météorologique rencontré.

Un système radar 1 selon l'invention permet ainsi d'adapter le nombre de points en lesquels on calcule la valeur de la fonction d'autocorrélation et de régler également l'espacement entre ces points en fonction du mode d'émission du radar en PRT multiples, pour déterminer une restitution satisfaisante du spectre de l'autocorélation du signal.

Dans un mode de réalisation particulier de l'invention, on prend les valeurs des 3 intervalles de temps T1, T2, T3 telles que T1, T2 = T1 + $\delta$T, T3 = T2 + $\delta$T= T1+2 $\delta$T.

Par exemple on a T1 = 2ms et $\delta$T= 1000 $\mu$s et N=7, soit T1=2ms, T2=3ms, T3=4ms.

Le module de traitement 4 calcule C(0), C(T1), C(T2)=C(T1 + $\delta$T), C(T3)=C(T1 + 2 $\delta$T), puis C(T1 + T2)= C (2T1 + $\delta$T), puis C(T3 +T1)= C(2T1 + 2$\delta$T), C(T2+T3) = C(2T1 + 3$\delta$) et C(T1 +T2+T3)= C(3T1 +3 $\delta$T).

On obtient ainsi des valeurs significatives d'autocorrélation C du signal s(t) sous la forme d'échantillons à la fréquence d'échantillonnage correspondant à un échantillon tous les $\delta$T (plus précisément, pour cet exemple, aux temps 0ms, 2ms, 3ms, 4ms, 5ms, 6ms, 7ms et 9ms), ce qui permet d'obtenir un spectre correspondant renseigné sur les fréquences comprises entre - 1/ 2$\delta$T et +1/2$\delta$T, avec une résolution spectrale 1/8$\delta$T.

Dans un mode de réalisation, on sélectionne un cycle d'émission à m PRT régulièrement espacées, m supérieur ou égal à 2 :

$$T2=T1+\delta T, \ \ T3=T1+2\delta T, \ \ T4=T1+3\delta T, \ \ ..... \ Tm =T1+(m-1)\, \delta T$$

Le module de traitement 4 calcule la fonction d'autocorrélation pour les points 0, T1, T2, ..., Tm fournit C (0), C (T1),C (T1+$\delta$T),C (T1+2$\delta$T), .... C (T1+(m-1)$\delta$T).

Il calcule en outre des valeurs combinées, comme par exemple C (2T1+$\delta$T), C (2T1 +2$\delta$T), ...

Dans un mode de réalisation, le nombre de points en lesquels le module de traitement calcule la valeur de la fonction d'autocorrélation est de l'ordre de 2m, à partir desquels le spectre du signal peut être restitué sur une gamme de fréquences égale à [-1/2$\delta$T, 1/2$\delta$T] et avec une résolution au moins égale à 1/(2m$\delta$T).

Le spectre est par exemple calculé par FFT.

Dans cette gamme de fréquences, la vitesse radiale d'un phénomène météorologique est déterminée sans ambigüité.

Dans un mode de réalisation, les valeurs du pas $\delta$et de m sont déterminées de façon à ce que (m-1) $\delta$T soit sensiblement égal à T1, ce qui permet d'améliorer la résolution du spectre obtenu.

Ainsi selon l'invention, le schéma d'émission du système radar en PRT multiples est défini de manière à enrichir le spectre de la fonction d'autocorrélation du signal , en multipliant le nombre de points distincts en lesquels la valeur de l'autocorrélation peut être calculée directement à l'aide des échantillons du signal reçus (c'est-à-dire espacés de la valeur desdits points respectifs), en répartissant régulièrement ces points, de manière à ce que la gamme de fréquences de restitution du spectre de la fonction d'autocorrélation C($\tau$) et/ou sa résolution spectrale permettent d'en déduire la vitesse des phénomènes météorologiques avec une précision telle que souhaitée.

Notamment la fréquence 1/2$\delta$T conditionne la vitesse maximale mesurable déterminée par l'équation 3 en prenant $\Delta\varphi$ =2 $\pi$.

A cette fin, dans un mode de réalisation, le module de traitement 4 est adapté pour modifier le nombre m de PRT du cycle d'émission et/ou le nombre N des points ou encore la localisation de ces points, notamment en modifiant l'ordre de succession des intervalles de temps T1 à Tm, en lesquels la fonction d'autocorrélation est calculée, ce qui augmente la résolution.

A cette fin, dans un autre mode de réalisation, le module de traitement 4 est adapté pour modifier la valeur du pas de décalage entre deux intervalles de temps successifs, pour adapter la résolution du spectre obtenu et/ou la gamme de fréquences sur laquelle le spectre est restitué.

Dans des modes de réalisation, m est supérieur à 3, 4, 5 etc.

Pour un radar à PRT multiples, la portée varie d'une impulsion à l'autre (la portée est égale à cT/2, où T est le temps entre deux impulsions d'émission et c la vitesse de la lumière).

Dans un mode de réalisation, le module de traitement 4 est adapté pour utiliser la totalité des échantillons du signal de réflexion pour caractériser les phénomènes météorologiques survenant à des distances proches, tandis qu'il n'utilise qu'une partie des échantillons du signal de réflexion (ceux provenant d' impulsions émises avec une portée suffisante) pour caractériser les phénomènes météorologiques survenant à des distances lointaines jugées moins critiques en terme d'applications. Pour caractériser des phénomènes localisés à des distances supérieures à D, il n'utilisera pas les impulsions suivies d'un intervalle de temps de valeur T telle que D >cT/2.

Le mode de réalisation décrit ci-dessus comprend l'étape de calculer directement les coefficients de la fonction d'autocorrélation en fonction des échantillons de signal reçu, en fonction desquels le spectre de la fonction d'autocorrélation est calculé. Dans un autre mode de réalisation de l'invention, le spectre de la fonction d'autocorrélation est déterminé en moyennant des spectres du signal d'écho obtenus par transformées de Fourier du signal d'écho déterminées à l'aide des échantillons du signal d'écho reçus et bourrage par des zéros. Cette technique exploite elle aussi les valeurs d'autocorrélation du signal reçu en des points correspondant à des combinaisons linéaires des différents intervalles de temps.

**Revendications**

1. Procédé de détermination de la vitesse d'au moins une cible par un radar météorologique (1) comprenant les étapes suivantes :

   - réception d'un signal (s(t)) provenant de la réflexion sur au moins la cible d'impulsions émises par le radar (1) selon un mode d'émission du radar tel que l'intervalle de temps entre deux impulsions est modifié à chaque impulsion et prend successivement m valeurs distinctes T1, T2,..., Tm et avec $m \geq 2$ ;
   - en fonction dudit signal reçu, détermination du spectre de la fonction d'autocorrelation (C) du signal reçu, en exploitant au moins les valeurs d'autocorrélation en des points du type a1.T1 + a2.T2+...+ am.Tm, ou des multiples desdits points, où a1, a2, ..., am sont des coefficients prenant des valeurs entières positives et au moins deux desdits m coefficients sont non nuls;
   - détermination de la vitesse de la cible en fonction du spectre déterminé.

2. Procédé selon la revendication 1, selon lequel on définit le mode d'émission du radar en fonction d'une répartition spectrale souhaitée de la fonction d'autocorrélation du signal reçu.

3. Procédé selon la revendication 1 ou 2, selon lequel le nombre m de valeurs distinctes d'intervalles de temps et/ou les valeurs respectives des intervalles de temps et/ou l'ordre de succession desdits intervalles de temps sont adaptés en fonction de la résolution du spectre souhaitée et/ou de la vitesse à déterminer.

4. Procédé selon l'une quelconque des revendications précédentes, selon lequel :

   - on calcule des valeurs d'autocorrélation (C) du signal reçu en des points du type a1.T1 + a2.T2+...+ am.Tm, ou des multiples desdits points, où a1, a2, ..., am sont des coefficients prenant des valeurs entières positives et au moins deux desdits m coefficients sont non nuls ;
   - on calcule une transformée fréquentielle de la fonction d'autocorrélation en fonction desdites valeurs calculées

5. Procédé selon l'une quelconque des revendications précédentes, selon lequel les m valeurs distinctes d'intervalle de temps T1, T2,..., Tm sont de la forme :

   Tk = T1 + (k-1).$\delta$T, avec k=1 à m, où Tk est la k-ième valeur d'intervalle de temps, et $\delta$T est un pas non nul.

6. Procédé selon la revendication 5, selon lequel les valeurs du pas $\delta$T et de m sont déterminées de façon à ce que (m-1).$\delta$T soit sensiblement égal à T1.

7. Procédé selon l'une quelconque des revendications précédentes selon lequel on sélectionne un mode d'émission du radar entre un premier mode opérationnel, et un second mode opérationnel, et selon lequel dans le premier mode, le calcul de la vitesse est effectué en fonction de la réflexion de toutes les impulsions et dans le second mode, le calcul de la vitesse est effectué en fonction de la réflexion de seulement certaines impulsions, en fonction d'une comparaison avec un seuil des valeurs de l'intervalle de temps ayant suivi lesdites impulsions.

8. Module de détermination de la vitesse d'au moins une cible destiné pour un radar météorologique (1) comprenant :

   - des moyens de réception (2) d'un signal provenant de la réflexion sur au moins la cible d'impulsions émises par le radar selon un mode d'émission du radar tel que l'intervalle de temps entre deux impulsions est modifié à chaque impulsion et prend successivement m valeurs distinctes T1, T2,..., Tm et avec $m \geq 2$;
   - des moyens de détermination (4) du spectre de la fonction d'autocorrelation (C) du signal reçu adaptés pour en fonction dudit signal reçu, déterminer le spectre de la fonction d'autocorrelation (C) du signal reçu en exploitant au moins les valeurs d'autocorrélation en des points du type a1.T1 + a2.T2+...+ am.Tm, ou des multiples desdits points, où a1, a2, ..., am sont des coefficients prenant des valeurs entières positives et au moins deux desdits m coefficients sont non nuls;

- des moyens de détermination (4) de la vitesse de la cible en fonction du spectre déterminé.

9. Module selon la revendication 8, comprenant en outre des moyens pour adapter le nombre m de valeurs distinctes d'intervalles de temps et/ou les valeurs respectives des intervalles de temps et/ou l'ordre de succession desdits intervalles de temps en fonction de la résolution du spectre souhaitée et/ou de la vitesse à déterminer.

10. Module selon la revendication 8 ou 9, dans lequel les m valeurs distinctes d'intervalle de temps sont de la forme : Tk = T1 + (k-1).$\delta$T, avec k=1 à m, où Tk est la k-ième valeur d'intervalle de temps, et $\delta$T est un pas non nul.

## Fig. 1

## Fig. 2

Calcul de la valeur d'autocorrélation C de s(t)
aux points 0, $T_1$, $T_2$, $T_3$, $T_1+T_2+T_3$, $T_1+T_2$, $T_1+T_3$
$T_2+T_3$, $2T_1+T_2$, $T_1+2T_2$ ...

100

Calcul transformée de Fourier de C en
fonction des valeurs d'autocorrélation calculées

101

Détermination de la vitesse des phénomènes
radiologiques en fonction du spectre de
l'autocorrélation calculé

102

## Fig. 3

Europäisches
Patentamt

European
Patent Office

Office européen
des brevets

**RAPPORT DE RECHERCHE EUROPEENNE**

Numéro de la demande

EP 10 16 1718

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 722 005 A1 (LORAL CORP [US]) 5 janvier 1996 (1996-01-05) | 1-6,8-10 | INV. G01S13/22 |
| A | * page 8, ligne 22 - page 21, ligne 6; figures 7a-7g * ----- | 7 | |
| A | S TORRES, R PASSARELLI, A SIGGIA, P KARHUNEN: "Alternating Dual-Pulse, Dual Frequency Techniques for Range and Velocity Ambiguity Mitigation on Weather Radars" FIFTH EUROPEAN CONFERENCE ON RADAR IN METEOROLOGY AND HYDROLOGY, 30 juin 2008 (2008-06-30), - 4 juillet 2008 (2008-07-04) XP007910850 HELSINKI * sec. 3.2 * ----- | 1-10 | |
| A | J. KALOGIROS: "Reconstruction of Doppler Spectra of Weather Radars from Irregular Pulse Repetition Time" FIFTH EUROPEAN CONFERENCE ON RADAR IN METEOROLOGY AND HYDROLOGY, 30 juin 2008 (2008-06-30), - 4 juillet 2008 (2008-07-04) XP007910857 HELSINKI * sec.2 * ----- | 1-10 | DOMAINES TECHNIQUES RECHERCHES (IPC) G01S |
| A | R. DOVIAK, D. ZRNIC, D. SIRMANS: "Doppler weather radar" PROCEEDINGS OF THE IEEE, vol. 67, no. 11, novembre 1979 (1979-11), pages 1522-1553, XP007910859 ISSN: 0018-9219 * le document en entier * ----- | 1-10 | |
| A | US 2008/211714 A1 (TABARY PIERRE [FR] ET AL) 4 septembre 2008 (2008-09-04) * le document en entier * ----- | 1-10 | |

Le présent rapport a été établi pour toutes les revendications

| Lieu de la recherche | Date d'achèvement de la recherche | Examinateur |
|---|---|---|
| Munich | 29 juin 2010 | Rudolf, Hans |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 16 1718

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-06-2010

| Document brevet cité au rapport de recherche | | Date de publication | Membre(s) de la famille de brevet(s) | | Date de publication |
|---|---|---|---|---|---|
| FR 2722005 | A1 | 05-01-1996 | AU | 699274 B2 | 26-11-1998 |
| | | | AU | 3001895 A | 25-01-1996 |
| | | | CA | 2193814 A1 | 11-01-1996 |
| | | | CN | 1154162 A | 09-07-1997 |
| | | | DE | 69507954 D1 | 01-04-1999 |
| | | | DE | 69507954 T2 | 09-09-1999 |
| | | | EP | 0767919 A1 | 16-04-1997 |
| | | | HK | 1014754 A1 | 14-07-2000 |
| | | | JP | 10509507 T | 14-09-1998 |
| | | | WO | 9600909 A1 | 11-01-1996 |
| | | | US | 5442359 A | 15-08-1995 |
| US 2008211714 | A1 | 04-09-2008 | EP | 1886166 A1 | 13-02-2008 |
| | | | FR | 2886737 A1 | 08-12-2006 |
| | | | WO | 2006129006 A1 | 07-12-2006 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Sebastian M. Torres ; Yannick F. Dubel ; D.S. Zrnié.** Design, Implementation, and Demonstration of a Staggered PRT Algorithm for the WSR-88D. *Journal of Atmospheric and Oceanic Technology,* 2004, vol. 21, 1389-1399
- **P.Tabary ; J. Gagneux ; J. Parent-Du-Chatelet.** Test of a Staggered PRT Scheme for the French Radar Network. *Journal of Atmospheric and Oceanic Technology,* 2005, vol. 22, 352-364
- **M. Sachidananda ; D.S. Zrnié.** Ground Clutter Filtering Dual polarized, Staggered PRT sequences. *Journal of Atmospheric and Oceanic Technology,* 2006, vol. 23, 1114-1130
- **M. Sachidananda ; D.S. Zrnié.** An Improved Clutter Filtering and spectral Moment Estimation Algorithm for Staggered PRT sequences. *Journal of Atmospheric and Oceanic Technology,* 2002, vol. 19, 323-331
- **M. Sachidananda ; D.S. Zrnié.** Clutter filtering and spectral Moment Estimation for Doppler weather radars Using Staggered Pulse Repetition Time (PRT). *Journal of Atmospheric and Oceanic Technology,* 2000, vol. 17, 323-331